# EUROPEAN PATENT APPLICATION

(11) **EP 4 815 596 A1**
(43) Date of publication of application: **30.09.2026**
(21) Application number: 23959476.5
(22) Date of filing: 22.11.2023
(51) Int. Cl.: H04W 72/1268, H04W 8/22, H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/042071
(87) International publication number: WO 2025/109733

(57) **Abstract**

A terminal according to one aspect of the present disclosure includes: a control section that judges, based on a codebook for a downlink shared channel (PUSCH) transmission in one-layer or more using 3 antenna ports, a non-coherent precoder for the PUSCH transmission; and a transmitting section that reports, in a case where the PUSCH transmission is supported, a capability related to use of 3 antenna ports.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Rel-15 NR supports uplink (UL) Multi Input Multi Output (MIMO) transmission with up to four layers. For future NR, it is studied that UL transmission with more than four layers is supported to achieve higher spectral efficiency. For example, for Rel-18 NR, up to 6-rank transmission using 6 antenna ports, up to 6 or 8-rank transmission using 8 antenna ports, and the like are under study.

Meanwhile, in Rel. 19 or later versions, there may be a case of not supporting uplink full power transmission. For such a case, it is under study to define a non-coherent UL codebook (a non-coherent codebook for UL) in order to easily achieve codebook-based transmission using 3 antenna ports (3-antenna-port codebook-based transmission).

In view of this, an object of the present disclosure is to provide a terminal, a radio communication method, and a base station that enable, for example, UL transmission using 3 antenna ports to be appropriately controlled.

### Solution to Problem

A terminal according to one aspect of the present disclosure includes: a control section that judges, based on a codebook for a downlink shared channel (PUSCH) transmission in one-layer or more using 3 antenna ports, a non-coherent precoder for the PUSCH transmission; and a transmitting section that reports, in a case where the PUSCH transmission is supported, a capability related to use of 3 antenna ports.

### Advantageous Effects of Invention

One aspect of the present disclosure enables UL transmission to be appropriately controlled.

### Brief Description of Drawings

[FIG. 1] FIG. 1 is a diagram to show an example of a table of precoding matrices W for single-layer (rank 1) transmission using 4 antenna ports in Rel-16 NR in a case where a transform precoder is disabled.
[FIG. 2] FIG. 2 is a diagram to show an example of a table of precoding matrices W for two-layer (rank 2) transmission using 4 antenna ports in Rel-16 NR in a case where a transform precoder is disabled.
[FIG. 3] FIG. 3 is a diagram to show an example of a table of precoding matrices W for three-layer (rank 3) transmission using 4 antenna ports in Rel-16 NR in a case where a transform precoder is disabled.
[FIG. 4] FIG. 4 is a diagram to show an example of a table of precoding matrices W for four-layer (rank 4) transmission using 4 antenna ports in Rel-16 NR in a case where a transform precoder is disabled.
[FIG. 5] FIG. 5A is a diagram to show an example of a table of precoding matrices W for single-layer (rank 1) transmission using 2 antenna ports in Rel-16 NR. FIG. 5B is a diagram to show an example of a table of precoding matrices W for two-layer (rank 2) transmission using 2 antenna ports in Rel-16 NR in a case where transform precoding is disabled.
[FIG. 6] FIG. 6 is a diagram to show an example of a correspondence relation of precoding information and number of layers field values to the numbers of layers and TPMIs in Rel-16 NR.
[FIG. 7] FIGS. 7A to 7C are each a diagram to show SRI indication or second SRI indication in codebook-based PUSCH transmission in Rel. 17.
[FIG. 8] FIG. 8 is a diagram to show an example of an antenna layout of 8 antenna ports.
[FIG. 9] FIG. 9 is a diagram to show candidates of a precoding matrix W depending on transmission ranks using 3 antenna ports, according to a first embodiment.
[FIG. 10] FIGS. 10A to 10C are diagrams to show examples of tables (separate tables) of precoding matrices W for one to three-layer (ranks 1 to 3) transmissions using 3 antenna ports in a case where a transform precoder is disabled, according to the first embodiment.
[FIG. 11] FIG. 11 is a diagram to show an example of a table (joint table) of precoding matrices W for one to three-layer (ranks 1 to 3) transmissions using 3 antenna ports in a case where a transform precoder is disabled, according to the first embodiment.
[FIG. 12] FIGS. 12A and 12B are each a diagram to show an example of a correspondence relation of precoding information and number of layers field values to the numbers of layers and TPMIs, according to a second embodiment.
[FIG. 13] FIG. 13 is a diagram to show an example of a correspondence relation of precoding information and number of layers field values to the numbers of layers and TPMIs, according to a third embodiment.
[FIG. 14] FIGS. 14A to 14C are diagrams to show examples of tables of precoding matrices W for one to three-layer (ranks 1 to 3) transmissions using 4 antenna ports in a case where a transform precoder is disabled, according to a variation.
[FIG. 15] FIG. 15 is a diagram to show an example of a correspondence relation of precoding information and number of layers field values to the numbers of layers and TPMIs, according to a variation.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.
[FIG. 20] FIG. 20 is a diagram to show an example of a vehicle according to one embodiment.

### Description of Embodiments

### (Control of Transmissions of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") or information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), or aperiodic CSI (Aperiodic SRS (A-SRS)). Note that the UE may periodically (or, after activation, periodically) transmit the P-SRS and the SP-SRS, and may transmit the A-SRS, based on an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook-based transmission, the UE may determine a precoder (precoding matrix) for the PUSCH transmission, based on an SRI, a transmitted rank indicator (TRI), and a transmitted precoding matrix indicator (TPMI). In a case of non-codebook-based transmission, the UE may determine a precoder for the PUSCH transmission, based on the SRI.

The SRS resource information may include an SRS resource ID (SRS-ResourceId), the number of SRS ports, an SRS port number, a transmission Comb, SRS resource mapping (for example, a time and/or frequency resource location, a resource offset, a resource periodicity, the number of repetitions, the number of SRS symbols, an SRS bandwidth, or the like), hopping-related information, an SRS resource type, a sequence ID, SRS spatial relation information, and the like.

The SRS spatial relation information (for example, an RRC information element "spatialRelationInfo") may indicate information on a spatial relation between a certain reference signal and an SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The SRS spatial relation information may include, as an index of the certain reference signal above, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The SRS spatial relation information may include a serving cell index, a BWP index (BWP ID), and the like corresponding to the certain reference signal above.

Regarding a certain SRS resource, when spatial relation information related to an SSB or CSI-RS and an SRS is configured, the UE may transmit the SRS resource by using the same spatial domain filter (spatial domain transmission filter) as a spatial domain filter (spatial domain reception filter) for reception of the SSB or CSI-RS. In this case, the UE may assume that a UE receive beam of the SSB or CSI-RS and a UE transmit beam of the SRS are the same.

Regarding a certain SRS (target SRS) resource, when spatial relation information related to another SRS (reference SRS) and the SRS (target SRS) is configured, the UE may transmit the target SRS resource by using the same spatial domain filter (spatial domain transmission filter) as a spatial domain filter (spatial domain transmission filter) for transmission of the reference SRS. In other words, in this case, the UE may assume that a UE transmit beam of the reference SRS and a UE transmit beam of the target SRS are the same.

The UE may determine, based on a value of a certain field (for example, an SRS resource indicator (SRI) field) in DCI (for example, DCI format 0_1), a spatial relation for a PUSCH scheduled by the DCI. Specifically, the UE may use, for PUSCH transmission, spatial relation information (for example, an RRC information element "spatialRelationInfo") for an SRS resource determined based on the value of the certain field (for example, the SRI).

In Rel-15/16 NR, when codebook based-transmission is used for a PUSCH, the UE may be configured with an SRS resource set including two SRS resources at maximum with codebook usage, by RRC, and may be indicated with one of the two SRS resources at maximum by DCI (one-bit SRI field). A transmit beam for the PUSCH is indicated by the SRI field.

The UE may judge a TPMI and the number of layers (transmission rank) for the PUSCH, based on a precoding information and number of layers field (hereinafter, also referred to as a precoding information field). The UE may select, based on the TPMI, the number of layers, and the like above, a precoder from an uplink codebook for the same number of ports as the number of SRS ports indicated by a higher layer parameter "nrofSRS-Ports" configured for an SRS resource indicated by the SRI field above.

In Rel-15/16 NR, when non-codebook-based transmission is used for a PUSCH, the UE may be configured with an SRS resource set including four SRS resources at maximum with non-codebook usage, by RRC, and may be indicated with one or more of the four SRS resources at maximum by DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook based PUSCH transmission or use non-codebook based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook-based PUSCH transmission, codebook-based transmission) may mean a PUSCH when the UE is configured with "codebook" as a transmission scheme. In the present disclosure, a non-codebook based PUSCH (non-codebook-based PUSCH transmission, non-codebook-based transmission) may mean a PUSCH when the UE is configured with "non-codebook" as a transmission scheme.

### (Determination of PUSCH Precoder in Codebook (CB)-based Transmission)

As described above, in a case of codebook (CB)-based transmission, the UE may determine a precoder for PUSCH transmission, based on an SRI, a TRI, a TPMI, and the like.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH.

The TRI and the TPMI may be specified by precoding information and number of layers field ("Precoding information and number of layers" field) of the DCI. The "precoding information and number of layers field" is also referred to as a "precoding information field," for simplicity.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence," for example).

The UE may determine a precoder to be used for the PUSCH transmission, based on precoder type information (for example, an RRC parameter "codebookSubset") included in PUSCH configuration information notified by higher layer signaling (for example, "PUSCH-Config" information element of RRC signaling). The UE may be configured with a PMI subset specified by the TPMI, by codebookSubset.

Note that the precoder type may be specified by any of or a combination of at least two of full coherent (fully coherent), partial coherent, or non-coherent (non coherent) (which may be indicated, for example, by a parameter such as "fullyAndPartialAndNonCoherent" or "partialAndNonCoherent."

For example, the RRC parameter "pusch-TransCoherence" indicating a UE capability may indicate full coherent (fullCoherent), partial coherent (partialCoherent), or non-coherent (nonCoherent). The RRC parameter "codebookSubset" may indicate "fullyAndPartialAndNonCoherent," "partialAndNonCoherent," or "nonCoherent."

Full coherent may mean that all the antenna ports to be used for transmission are synchronized (which may be expressed as being able to be matched in relation to phase, being able to be phase-controlled for each coherent antenna port, being able to have an appropriate precoder for each coherent antenna port, or the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

In the present disclosure, the precoder type, coherency, PUSCH transmission coherence, a coherent type, a coherence type, a codebook type, a codebook subset, a codebook subset type, and the like may be interchangeably interpreted.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB-based transmission.

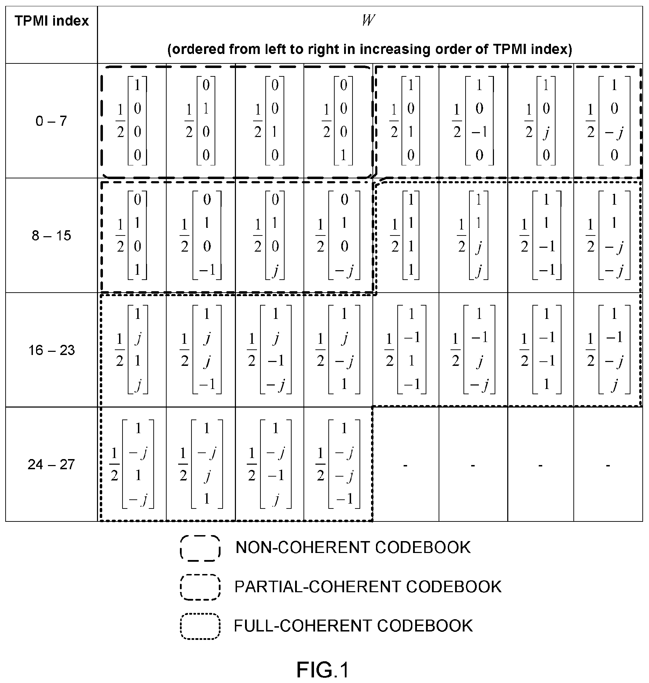

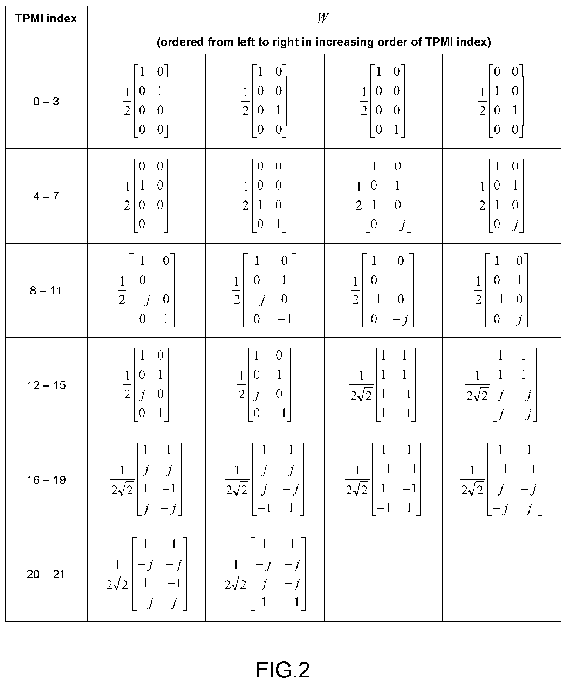

FIG. 1 is a diagram to show an example of association between codebook subsets and TPMI indices. FIG. 1 corresponds to a table of precoding matrices W for single-layer (rank 1) transmission using 4 antenna ports in Rel-16 NR in a case where transform precoding (which may be referred to as a transform precoder) is disabled. FIG. 1 shows corresponding W ordered from left to right in increasing order of TPMI indices (the same also applies to FIG. 2).

Such a correspondence relation (which may be referred to as a table) indicating W corresponding to TPMI indices as that shown in FIG. 1 is also referred to as a codebook. Part of this codebook is also referred to as a codebook subset.

In FIG. 1, when the codebook subset (codebookSubset) is fullyAndPartialAndNonCoherent, the UE is notified of a TPMI (TPMI index) of any one of 0 to 27, for the single-layer transmission. When the codebook subset is partialAndNonCoherent, the UE is configured with a TPMI of any one of 0 to 11, for the single-layer transmission. When the codebook subset is non-coherent (nonCoherent), the UE is configured with a TPMI of any one of 0 to 3, for the single-layer transmission.

In FIG. 1, in a case where a TPMI of any one of 0 to 3 is notified, a non-coherent precoder is applied. In a case where a TPMI of any one of 4 to 11 is notified, a partial-coherent precoder is applied. In a case where a TPMI of any one of 12 to 27 is notified, a full-coherent precoder is applied.

FIGS. 2 to 4 respectively correspond to tables of precoding matrices W for two to four-layer (ranks 2 to 4) transmissions using 4 antenna ports in Rel-16 NR in a case where transform precoding is disabled.

In FIG. 2, a TPMI that a UE is notified of for two-layer transmission is from 0 to 21 (the codebook subset is fullyAndPartialAndNonCoherent), from 0 to 13 (the codebook subset is partialAndNonCoherent), or from 0 to 5 (the codebook subset is nonCoherent).

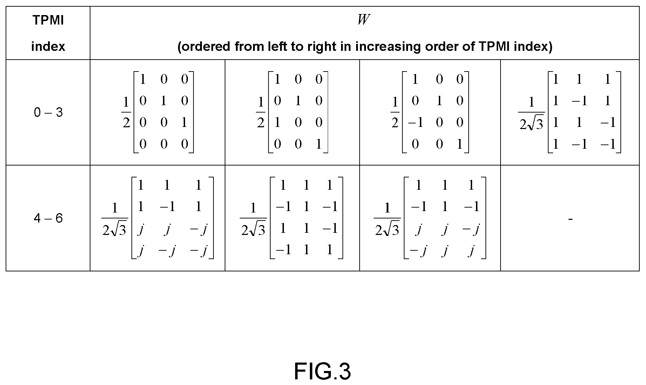

In FIG. 3, a TPMI that a UE is notified of for three-layer transmission is from 0 to 6 (the codebook subset is fullyAndPartialAndNonCoherent), from 0 to 2 (the codebook subset is partialAndNonCoherent), or 0 (the codebook subset is nonCoherent).

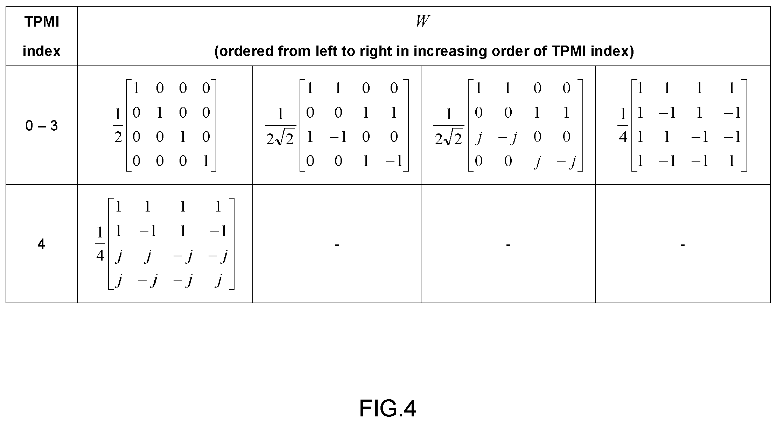

In FIG. 4, a TPMI that a UE is notified of for four-layer transmission is from 0 to 4 (the codebook subset is fullyAndPartialAndNonCoherent), from 0 to 2 (the codebook subset is partialAndNonCoherent), or 0 (the codebook subset is nonCoherent).

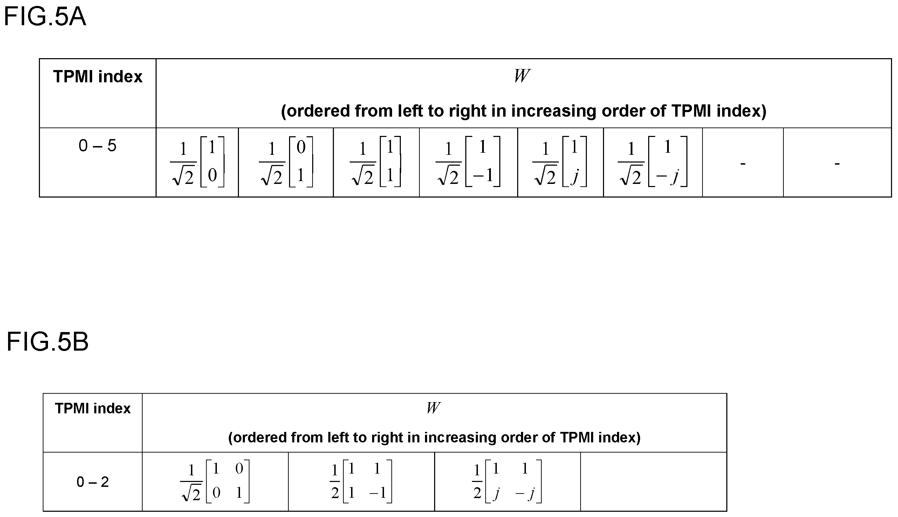

FIG. 5A corresponds to a table of precoding matrices W for single-layer (rank 1) transmission using 2 antenna ports in Rel-16 NR. FIG. 5B corresponds to a table of precoding matrices W for two-layer (rank 2) transmission using 2 antenna ports in Rel-16 NR in a case where transform precoding is disabled.

In FIG. 5A, a TPMI that a UE is notified of for 2-port single-layer transmission is from 0 to 5 (the codebook subset is fullyAndPartialAndNonCoherent) or from 0 to 1 (the codebook subset is nonCoherent). In a case where a TPMI to be notified is from 0 to 1, a non-coherent precoder is applied. In a case where a TPMI to be notified is from 2 to 5, a full-coherent precoder is applied.

In FIG. 5B, a TPMI that a UE is notified of for 2-port two-layer transmission is from 0 to 2 (the codebook subset is fullyAndPartialAndNonCoherent) or 0 (the codebook subset is nonCoherent).

Note that a precoding matrix in which only one element in each column is non-zero may be referred to as a non-coherent codebook. A precoding matrix in which a specific number of elements in each column (which is greater than 1, but is not the number of all the elements in each column) is non-zero may be referred to as a partial-coherent codebook. A precoding matrix in which all the elements in each column are non-zero may be referred to as a full-coherent codebook.

The non-coherent codebook and the partial-coherent codebook may be referred to as an antenna selection precoder, an antenna port selection precoder, or the like. For example, the non-coherent codebook (non-coherent precoder) may be referred to as a 1-port selection precoder, a 1-port port selection precoder, or the like. The partial-coherent codebook (partial-coherent precoder) may be referred to as an x-port (x is an integer greater than 1) selection precoder, an x-port port selection precoder, or the like. The full-coherent codebook may be referred to as a non-antenna selection precoder, a full-port precoder, or the like. In the present disclosure, a codebook, a codebook subset, and a precoder may be interchangeably interpreted.

Note that, in the present disclosure, the partial-coherent codebook may correspond to the codebook obtained by excluding a codebook corresponding to a TPMI indicated for the UE configured with a non-coherent codebook subset (for example, an RRC parameter "codebookSubset" = "nonCoherent") among a codebook (precoding matrices) corresponding to TPMIs indicated by DCI for codebook-based transmission, for the UE configured with a partial-coherent codebook subset (for example, an RRC parameter "codebookSubset" = "partialAndNonCoherent") (in other words, a codebook corresponding to TPMIs = 4 to 11 in a case of 4-antenna port single-layer transmission).

Note that, in the present disclosure, the fully-coherent codebook may correspond to the codebook obtained by excluding a codebook corresponding to a TPMI indicated for the UE configured with a partial-coherent codebook subset (for example, an RRC parameter "codebookSubset" = "partialAndNonCoherent") among a codebook (precoding matrices) corresponding to TPMIs indicated by DCI for codebook-based transmission, for the UE configured with a fully-coherent codebook subset (for example, an RRC parameter "codebookSubset" = "fullyAndPartialAndNonCoherent") (in other words, a codebook corresponding to TPMIs = 12 to 27 in a case of 4-antenna port single-layer transmission).

Note that, as seen from FIGS. 5A and 5B, there is no partial-coherent precoder for 2-antenna port transmission, and thus a configuration of the codebook subset being partialAndNonCoherent need not be applied to the 2 antenna ports.

### (Precoding Information Field)

As described above, the UE may judge, based on a precoding information field of DCI for scheduling a PUSCH (for example, DCI format 0_1/0_2), a TPMI and the number of layers (transmission rank) for the PUSCH.

For a codebook based PUSCH, the number of bits of the precoding information field may be judged (may vary) based on configuration of enabling or disabling of a transform precoder for the PUSCH (for example, a higher layer parameter "transformPrecoder"), configuration of a codebook subset for the PUSCH (for example, a higher layer parameter "codebookSubset"), configuration of a maximum number of layers for the PUSCH (for example, a higher layer parameter "maxRank"), configuration of uplink full-power transmission for the PUSCH (for example, a higher layer parameter "ul-FullPowerTransmission"), the number of antenna ports for the PUSCH, and the like.

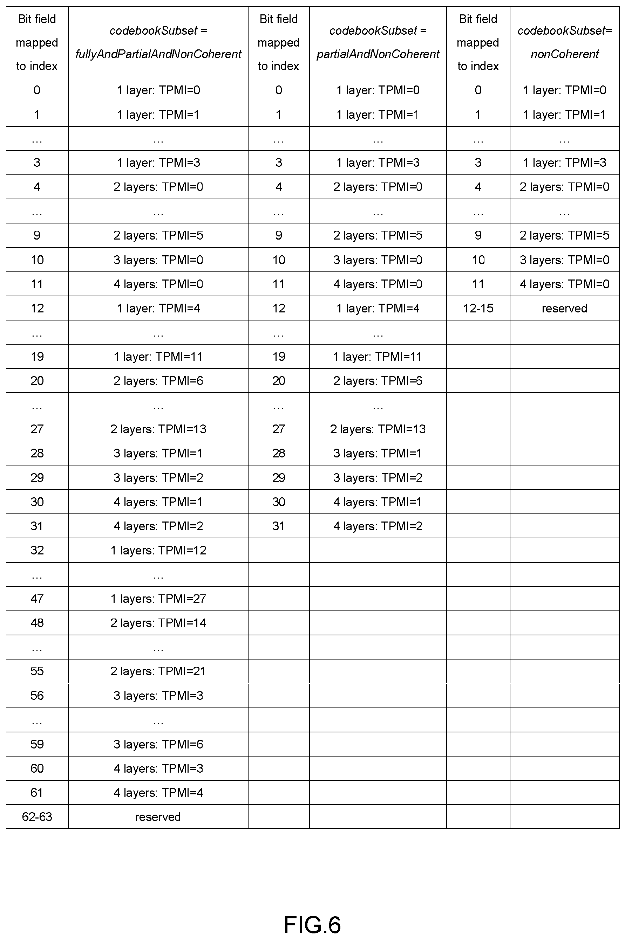

FIG. 6 is a diagram to show an example of a correspondence relation of precoding information and number of layers field values to the numbers of layers and TPMIs in Rel-16 NR. The correspondence relation in this example is a correspondence relation for 4 antenna ports for a case where a transform precoder is configured to be disabled, where the maximum rank (maxRank) is configured with 2, 3, or 4, and where no uplink full power transmission is configured or uplink full power transmission is configured with full power mode 2 (fullpowerMode2) or full power (fullpower), but the example is not limited to this. Note that it should be understood by those skilled in the art that "Bit field mapped to index" shown in FIG. 6 indicates the values in the precoding information and number of layers field.

In FIG. 6, the precoding information field is 6 bits when the UE is configured with a full-coherent (fullyAndPartialAndNonCoherent) codebook subset, is 5 bits when the UE is configured with a partial-coherent (partialAndNonCoherent) codebook subset, and is 4 bits when the UE is configured with a non-coherent (nonCoherent) codebook subset.

Note that, as shown in FIG. 6, the number of layers and a TPMI corresponding to a certain value of the precoding information field may be the same (common) irrespective of a codebook subset configured to the UE. For example, in FIG. 6, the numbers of layers and TPMIs indicated by values = 0 to 11 of the precoding information field may be the same for full-coherent (fullyAndPartialAndNonCoherent), partial-coherent (partialAndNonCoherent), and non-coherent (nonCoherent) codebook subsets. In FIG. 6, the numbers of layers and TPMIs indicated by values = 0 to 31 of the precoding information field may be the same for full-coherent (fullyAndPartialAndNonCoherent) and partial-coherent (partialAndNonCoherent) codebook subsets.

Note that the precoding information field may be 0 bit for a non-codebook based PUSCH. The precoding information field may be 0 bit for a 1-antenna port codebook based PUSCH.

### (SRS Configuration for Codebook Based PUSCH)

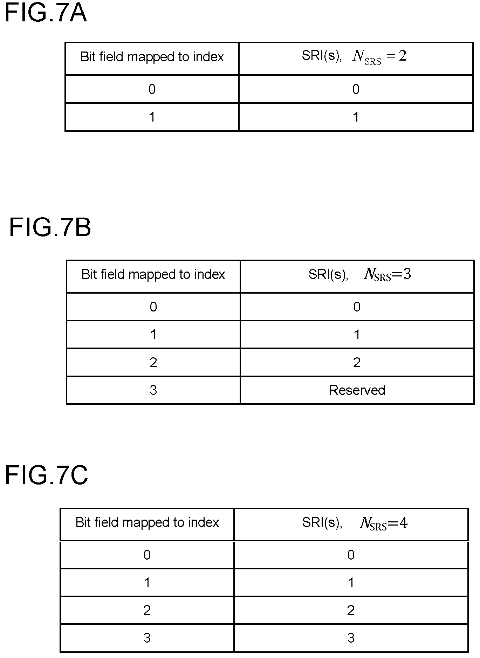

FIG. 7A is a diagram to show SRI indication or second SRI indication in codebook-based PUSCH transmission for a case of no ul-FullPowerTransmission configured or ul-FullPowerTransmission = fullpowerMode1 or ul-FullPowerTransmission = fullpowerMode2 or ul-FullPowerTransmission = fullpower and N_{SRS} = 2, in Rel. 17. FIG. 7B is a diagram to show SRI indication or second SRI indication for codebook-based PUSCH transmission for a case of ul-FullPowerTransmission = fullpowerMode2 and N_{SRS} = 3, in Rel. 17. FIG. 7C is a diagram to show SRI indication or second SRI indication for codebook-based PUSCH transmission for a case of ul-FullPowerTransmission = fullpowerMode2 and N_{SRS} = 4, in Rel. 17.

The SRI indication corresponds to an SRS resource indicator field of DCI and the second SRI indication corresponds to a Second SRS resource indicator field of DCI. An SRS resource set indicator field has 2 bits in a case where txConfig = nonCodeBook and there are two SRS resource sets that are configured with srs-ResourceSetToAddModList and that are associated with "nonCodeBook" usage or where txConfig = codebook and there are two SRS resource sets that are configured with srs-ResourceSetToAddModList and that are associated with "codebook" usage. Otherwise, the SRS resource set indicator field has 0 bits.

The SRS resource indicator field has [log₂(N_{SRS})] bits in a case of the higher layer parameter txConfig = codebook, in accordance with FIGS. 7A to 7C. N_{SRS} is the number of configured SRS resources in an SRS resource set indicated by the SRS resource set indicator field (if any). Otherwise, N_{SRS} is the number of configured SRS resources associated with usage of a higher parameter of a value 'codeBook,' in an SRS resource set configured with the higher layer parameter srs-ResourceSetToAddModList.

In codebook-based transmission, a PUSCH is scheduled by DCI format 0_0, DCI format 0_1, or DCI format 0_2, or configured in a semi-fixed manner. Only one or two SRS resource sets can be configured in SRS-ResourceSetToAddModList with usage "codebook" of a higher layer parameter of SRS-ResourceSet. Only one or two SRS resource sets can be configured in srs-ResourceSetToAddModListDCI-0-2 with parameter usage "codebook" of a higher layer of SRS-ResourceSet.

In a case where, in srs-ResourceSetToAddModList or srs-ResourceSetToAddModListDCI-0-2, usage of the higher layer parameter of SRS-ResourceSet is configured with "codebook" to configure two SRS resource sets, one or two SRIs and one or two TPMIs are respectively provided by two SRS resource indicator fields and two precoding information fields.

In accordance with an SRS resource set that PUSCH repetitions are associated with, the UE applies the indicated SRI(s) and TPMI(s) to one or more PUSCH repetitions. In a case where two SRS resource sets are configured in SRS-ResourceSetToAddModList or srs-ResourceSetToAddModListDCI-0-2 and usage of the higher layer parameter of SRS-ResourceSet is configured with "codebook," the UE does not expect that the numbers of SRS resources different between the two SRS resource sets are configured.

In codebook-based transmission, only one SRS resource may be indicated based on an SRI from among an SRS resource set. Except for a case where the higher layer parameter "ul-FullPowerTransmission" is configured with "fullpowerMode2," the maximum number of configured SRS resources for codebook-based transmission is two. In a case where an aperiodic SRS is configured for the UE, an SRS request field in DCI triggers transmission of an aperiodic SRS resource.

Except for the case where the higher layer parameter "ul-FullPowerTransmission" is configured with "fullpowerMode2", when a plurality of SRS resources are configured with "codebook" by SRS-ResourceSet, the UE expect that, for all the SRS resources, the higher layer parameter "nrofSRS-Port" of SRS-Resource in SRS-ResourceSet is configured with the same value.

In the case where the higher layer parameter "ul-FullPowerTransmission" is configured with "fullpowerMode2," (1) to (3) below are applied.
(1) In an SRS resource set configured with usage "codebook," the UE can configure one SRS resource or a plurality of SRS resources with the same or different number(s) of SRS ports.
(2) In a case where a plurality of SRS resources are configured in an SRS resource set, for all the SRS resources in the SRS resource set configured with usage "codebook," up to two different spatial relations can be configured.
(3) Depending on UE capabilities, in an SRS resource set configured with usage "codebook," up to two or four SRS resources are supported.

For a typical codebook based PUSCH, one SRS resource set including two SRS resources with the same number of ports can be configured. In a case of codebook-based PUSCH repetitions (for multi-transmission/reception point (multi-TRP)), two SRS resource sets including the same number of SRS resources may each be configured. In a case of "fullpowerMode2" in codebook base, one SRS resource set and SRS resources with the same number of ports or different numbers of ports can be configured.

### (Transmission With More Than 4 Antenna Ports)

Rel-15/16 NR supports uplink (UL) Multi Input Multi Output (MIMO) transmission with up to four layers. For future radio communication systems, it is studied that UL transmission with more than four layers is supported to achieve higher spectral efficiency. For example, for Rel-18 NR, up to 6-rank transmission using 6 antenna ports, up to 6 or 8-rank transmission using 8 antenna ports, and the like are under study.

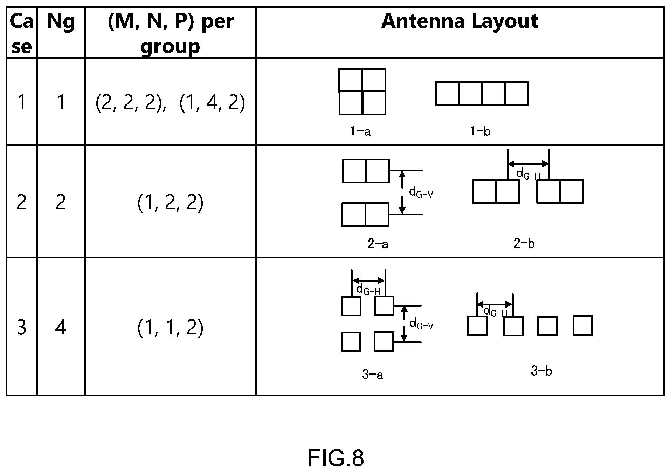

FIG. 8 is a diagram to show an example of an antenna layout of 8 antenna ports. Ng is the number of antenna groups. M is the number of antennas (or antenna elements) in a first dimension, and N is the number of antennas (or antenna elements) in a second dimension. The first dimension and the second dimension are, for example, a horizontal direction and a vertical direction, respectively. P is the number of polarized surfaces. P=2 leads to a cross-polarized antenna.

The antenna group may be referred to as a coherent group. The coherent group may include one or more coherent ports. For example, a partial-coherent UE may include a plurality of coherent groups. Antenna ports in a coherent group may be coherent with each other. Antenna ports in different coherent groups may not be coherent with each other.

Each coherent group may correspond to a different transmission panel/transmission chain (Tx chain)/SRS resource set/RS resource set/spatial relation information (spatial relation info)/joint Transmission Configuration Indication state (joint TCI state)/UL TCI state/reception TRP. Here, the SRS resource set may correspond particularly to an SRS resource set for codebook or non-codebook usage. Each coherent group may correspond to a different reception TRP. The coherent group may be referred to as a coherent antenna group, a port group, an antenna set, or the like.

The UE may report, as UE capability information, the number of supported antenna groups/pieces of antenna layout information/coherences. The UE may be configured with coherent groups (for example, the number of coherent groups, the number of ports included in each coherent group) via higher layer signaling.

Note that the antenna layout is not limited to the example shown in FIG. 8. For example, the number of panels that antennas are disposed on, panel orientation, coherency of each panel/antenna (such as full coherent, partial coherent, or non-coherent), an antenna layout in a specific direction (such as horizontal or vertical direction), and polarization antenna configuration (such as single polarization, cross polarization, and the number of polarization planes) may be different from those in the examples of FIGS. 7A and 7B. dG-H and dG-V represent a horizontal spacing and a vertical spacing each between centers of adjacent antenna groups, respectively.

Rel-15/16 NR supports transmission of one codeword (CW) in one PUSCH, while for Rel-18 NR, it is studied that a UE transmits more than one CW in one PUSCH. For example, support of transmission of 2 CWs for ranks 5 to 8, support of transmission of 2 CWs for ranks 2 to 8, and the like are under study.

In a UE of Rel. 15 and Rel. 16, it is assumed that only one beam/panel is used for UL transmission at a certain time, but for Rel. 17 or later versions, it is studied that simultaneous UL transmissions (for example, PUSCH transmissions) with a plurality of beams/plurality of panels to one or more TRPs are performed to improve UL throughput and reliability. Note that the simultaneous PUSCH transmissions with the plurality of beams/plurality of panels may correspond to PUSCH transmissions with more than four layers, or may correspond to PUSCH transmissions with four or less layers.

A precoding matrix for UL transmission using more than 4 antenna ports (the number of antenna ports more than four) is also under study. For example, a codebook for 8-port transmission (which may be referred to as an 8-transmission UL codebook (8 TX UL codebook) or the like) is under study.

### (Analysis)

Meanwhile, in Rel. 19 or later versions, there may be a case of not supporting uplink (UL) full power transmission described above and of without SRS enhancement/extension. For such a case, it is under study to define a non-coherent UL codebook (a non-coherent codebook for UL) in order to easily achieve codebook-based transmission using 3 antenna ports (3-antenna-port codebook-based transmission).

In view of this, the inventors of the present invention focused on presence of such a case, and came up with the idea of a radio communication method (new non-coherent UL codebook) according to the present disclosure.

Embodiments according to the present disclosure will be described in detail with reference to the drawings as follows. The radio communication methods according to respective embodiments may each be employed individually, or may be employed in combination.

### (Various Interpretations, etc.)

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a TPMI and a TPMI index may be interchangeably interpreted. A port and an antenna port may be interchangeably interpreted. 8 TX (8 transmissions) may mean 8 ports or 8 antenna ports. A port/antenna port may mean a port/antenna port for UL (for example, SRS/PUSCH) transmission. In the present disclosure, an SRS resource set and a resource set may be interchangeably interpreted. A coherent group and an SRS resource set may be interchangeably interpreted.

The present disclosure primarily describes 8 TX, but may also be applied to 5, 6, 7, 8, or higher TX, 4 or lower TX, and the like, similarly to 8 TX. "8" in the following embodiments may be interpreted as "n (which is any integer)." In this case, those of ordinary skill in the art will be able to appropriately interpret the number of layers/number of ports described based on the assumption that a maximum value is "8," by assuming that the maximum value is "n."

Note that, in the present disclosure, "having a capability of ..." may be interpreted as "supporting/reporting a capability of ...," and vice versa.

In the present disclosure, a rank, a transmission rank, the number of layers, and the number of antenna ports may be interchangeably interpreted. One codeword being applied and the number of layers being four layers or less may be interchangeably interpreted. Two codewords being applied and the number of layers being more than four layers may be interchangeably interpreted.

In the present disclosure, a table may be interpreted as one or a plurality of tables, and vice versa.

DCI in the following embodiments may mean DCI for scheduling at least one of a PUSCH and a PDSCH (for example, DCI format 0_x or 1_x (where x is an integer)). Although the following embodiments are premised on codebook-based transmission (PUSCH), the embodiments are not limited to this.

### (Radio Communication Method)

The embodiments of the present disclosure can be broadly divided as below.
- First embodiment: a new codebook for a 3 TX UE
- Second embodiment: a bit field for a new codebook
- Third embodiment: enablement of a new codebook
- Fourth embodiment: SRS configuration for a new codebook based PUSCH

Hereinafter, based on these, the embodiments will be described.

In the present disclosure, the embodiments/options may each be employed individually, or may be employed in combination of two or more of them.

In the present disclosure, association between precoding matrices W and TPMI indices may be defined in Specification 1 for physical channels and modulation (Physical channels and modulation/Uplink/Physical channels/Physical uplink shared channel/Precoding). In the present disclosure, such association, table P-x, a TPMI table, a precoding matrix table, and a precoder table may be interchangeably interpreted.

In the present disclosure, association of precoding information (TPMIs) and the numbers of layers (TRIs) with indices (precoding information field values) may be defined in Specification 2 for multiplexing and channel coding (Multiplexing and channel coding/Downlink transport channels and control information/Downlink control information/DCI formats/DCI format 0_1). In the present disclosure, such association, table D-x, a TRI/TPMI indication table, a DCI indication table, and a precoding information table may be interchangeably interpreted.

In the present disclosure, a precoding matrix and a precoder may be interchangeably interpreted.

In the following embodiments, a precoding matrix/precoder may mean a non-coherent precoder.

In the following embodiments, a number (for example, 0, 1, 2, or the like) corresponding to a certain index (for example, TPMI index, antenna port index) may be interpreted as a number with "#" (for example, #0, #1, #2, or the like).

### <First Embodiment>

The first embodiment relates to a new codebook for a 3 TX UE (a UE that supports one to three-layer transmissions using 3 antenna ports. The new codebook according to the first embodiment may be referred to as a non-coherent UL codebook using 3 antenna ports.

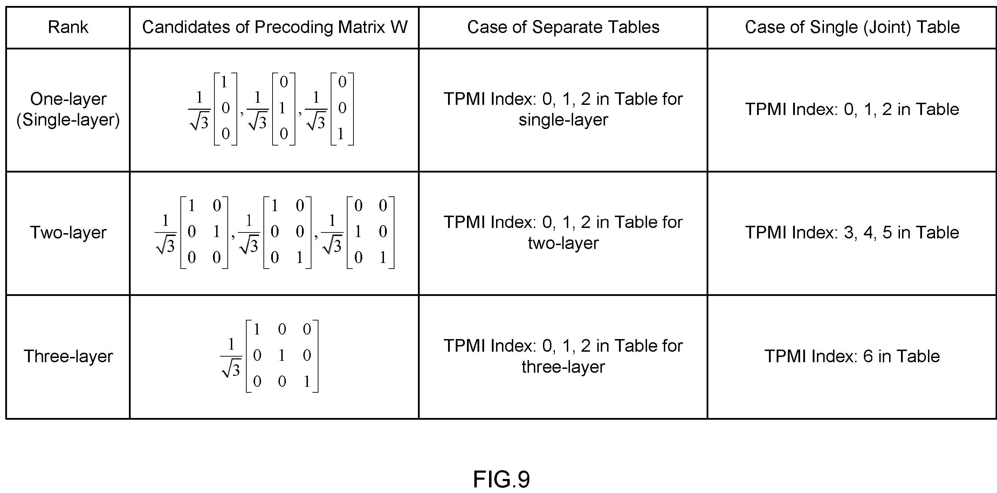

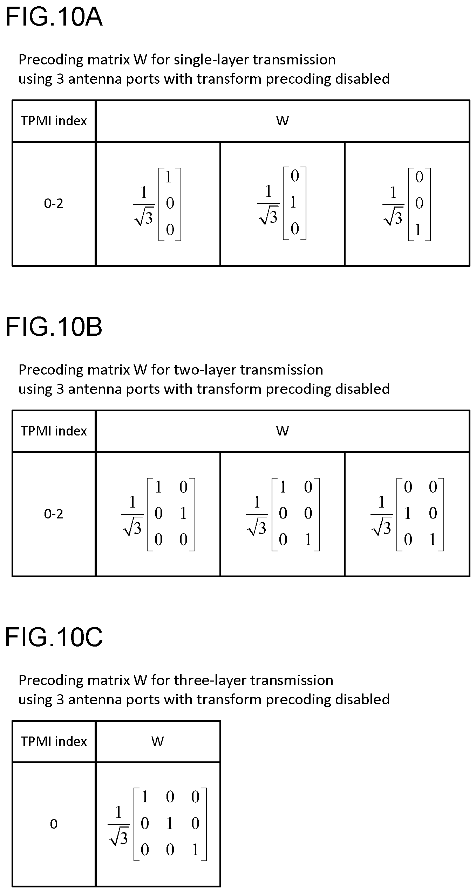

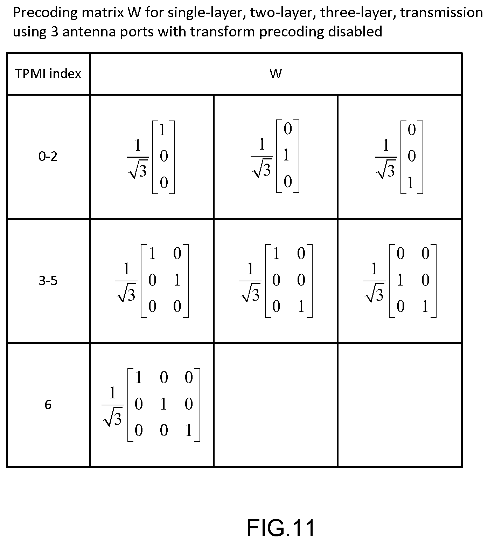

FIG. 9 is a diagram to show candidates of a precoding matrix W depending on transmission ranks using 3 antenna ports, according to the first embodiment. FIGS. 10A to 10C are diagrams to show examples of tables (separate tables) of precoding matrices W for one to three-layer (ranks 1 to 3) transmissions using 3 antenna ports in a case where a transform precoder is disabled, according to the first embodiment. FIG. 11 is a diagram to show an example of a table (joint table) of precoding matrices W for one to three-layer (ranks 1 to 3) transmissions using 3 antenna ports in a case where a transform precoder is disabled, according to the first embodiment. In FIGS. 10 and 11, columns of W have TPMI indices in increasing order (for example, 0 to 2) from left to right. The same applies to the following.

The new non-coherent UL codebook for the 3 TX UE may be defined as in FIGS. 9 to 11.

Precoding matrices W corresponding to rank 1 (single-layer), rank 2 (two-layer), and rank 3 (three-layer) may be defined in separate tables (the separate tables shown in FIGS. 10A to 10C) or in one (single) table (the joint table shown in FIG. 11).

As shown in FIG. 9, precoding matrices W corresponding to rank 1 (single-layer) may include three precoders. As shown in FIGS. 9 and 10A, in separate tables, three precoders may correspond to TPMI indices 0 to 2. As shown in FIGS. 9 and 11, in a single table, three precoders may correspond to TPMI indices 0 to 2.

As shown in FIG. 9, precoding matrices W corresponding to rank 2 may include three precoders. As shown in FIGS. 9 and 10B, in the separate tables, three precoders may correspond to TPMI indices 0 to 2. As shown in FIGS. 9 and 11, in the single table, three precoders may correspond to TPMI indices 3 to 5.

As shown in FIG. 9, precoding matrices W corresponding to rank 3 may include one precoder. As shown in FIGS. 9 and 10C, in the separate tables, one precoder may correspond to TPMI index 0. As shown in FIGS. 9 and 11, in the single table, one precoder may correspond to TPMI index 6.

The maximum rank numbers (1 to 3) supported by the UE (3 TX UE) may be reported in a UE capability.

This embodiment allows the UE to appropriately judge/apply a precoder depending on transmission ranks using 3 antenna ports on the basis of the separate tables/single table.

### <Second Embodiment>

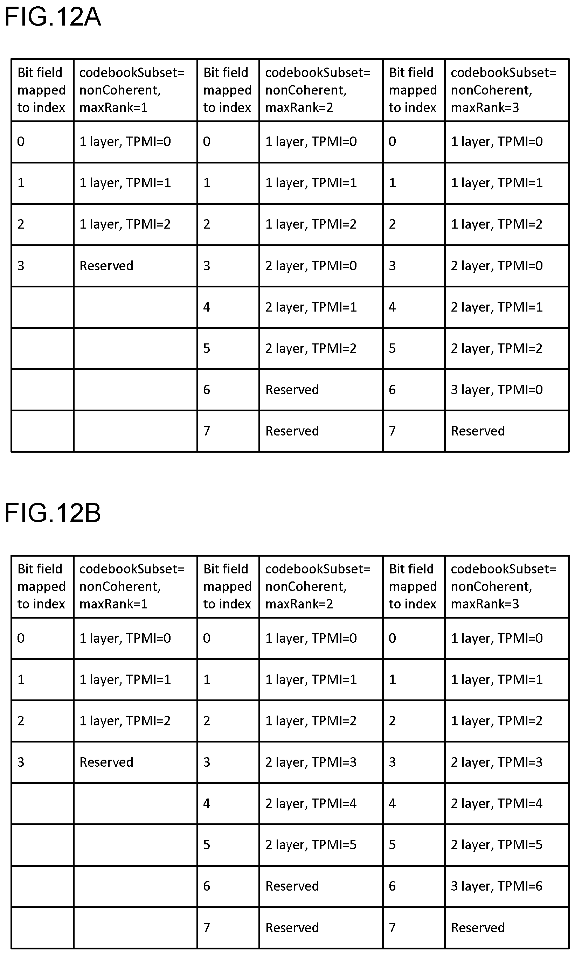

The second embodiment relates to a bit field for the new codebook for the 3 TX UE. FIGS. 12A and 12B are each a diagram to show an example of a correspondence relation of precoding information and number of layers field values to the numbers of layers and TPMIs, according to the second embodiment. FIG. 12A corresponds to the separate tables described in FIG. 10. FIG. 12B corresponds to the single table described in FIG. 11.

The UE may be configured/indicated with the new codebook (codebook subset) for the 3 TX UE. For example, the UE may judge, based on the bit field shown in FIG. 12, a precoder (a TPMI and the number of layers) to be applied. The bit field shown in FIG. 12 may be included in DCI (for example, DCI format 0_1/0_2) that schedules a PUSCH.

As shown in FIG. 12A, in a case where the codebook subset is non-coherent and the maximum rank number (transmission rank) is 1, the bit field indices (Bit field mapped to index) 0 to 2 respectively correspond to (indicate) TPMIs = 0 to 2 in one-layer. The bit field index 3 may be a reserved bit.

In a case where the codebook subset is non-coherent and the maximum rank number is 2, the bit field indices 0 to 2 respectively correspond to (indicate) TPMIs = 0 to 2 in one-layer and the bit field indices 3 to 5 respectively correspond to TPMIs = 0 to 2 in two-layer. The bit field indices 6 and 7 may be reserved bits.

In a case where the codebook subset is non-coherent and the maximum rank number is 3, the bit field indices 0 to 2 respectively correspond to (indicate) TPMIs = 0 to 2 in one-layer, the bit field indices 3 to 5 respectively correspond to TPMIs = 0 to 2 in two-layer, and the bit field index 6 corresponds to TPMI = 0 in three-layer. The bit field index 7 may be a reserved bit.

As shown in FIG. 12B, in a case where the codebook subset is non-coherent and the maximum rank number (transmission rank) is 1, the bit field indices (Bit field mapped to index) 0 to 2 respectively correspond to (indicate) TPMIs = 0 to 2 in one-layer. The bit field index 3 may be a reserved bit.

In a case where the codebook subset is non-coherent and the maximum rank number is 2, the bit field indices 0 to 2 respectively correspond to (indicate) TPMIs = 0 to 2 in one-layer and the bit field indices 3 to 5 respectively correspond to TPMIs = 3 to 5 in two-layer. The bit field indices 6 and 7 may be reserved bits.

In a case where the codebook subset is non-coherent and the maximum rank number is 3, the bit field indices 0 to 2 respectively correspond to (indicate) TPMIs = 0 to 2 in one-layer, the bit field indices 3 to 5 respectively correspond to TPMIs = 3 to 5 in two-layer, and the bit field index 6 corresponds to TPMI = 6 in three-layer. The bit field index 7 may be a reserved bit.

As described above, in FIG. 12, in a case of the maximum rank number = 1, the number of bits required for TPMI indication is 2 bits, and in a case of the maximum rank number = 2 or 3, the number of bits required for TPMI indication is 3 bits.

According to this embodiment, it is possible for the UE to appropriately judge/apply, based on a precoding information field of DCI (for example, DCI format 0_1/0_2) that schedules a PUSCH, a TPMI and the number of layers (transmission rank) for the PUSCH, in other words, a precoder depending on transmission ranks using 3 antenna ports.

### <Third Embodiment>

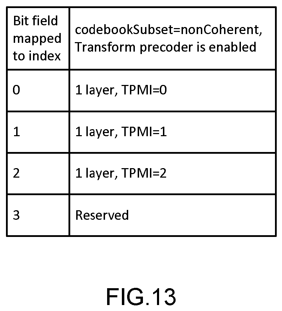

The third embodiment relates to enablement of the new codebook for the 3 TX UE. FIG. 13 is a diagram to show an example of a correspondence relation of precoding information and number of layers field values to the numbers of layers and TPMIs, according to the third embodiment.

Although the first/second embodiment above illustrates a case where a transform precoder is disabled, this is not restrictive. Depending on UE capabilities, a transform precoder may be enabled/configured for the 3 TX UE (for example, the maximum rank number = 1).

As shown in FIG. 13, in a case where the codebook subset is non-coherent and a transform precoder is enabled, the bit field indices 0 to 2 respectively correspond to (indicate) TPMIs = 0 to 2 in one-layer. The bit field index 3 may be a reserved bit.

Although, as shown in FIG. 13, a dedicated correspondence relation (table) may be defined corresponding to a case with a transform precoder enabled, the correspondence relation in the maximum rank number = 1 shown in FIG. 12 may be referenced to (used).

As described above, according to FIG. 13 (or FIG. 12), in a case of the maximum rank number = 1 with a transform precoder enabled, the number of bits required for TPMI indication is 2 bits.

The UE (3 TX UE) can report, in signaling for a UE capability, whether to support a transform precoder for a codebook based PUSCH in rank number = 1.

This embodiment allows the UE to support one to three-layer transmissions using 3 antenna ports.

### <Fourth Embodiment>

The fourth embodiment relates to an SRS configuration of a new codebook based PUSCH for the 3 TX UE.

With respect to the new codebook based PUSCH for the 3 TX UE (for example, including a configured grant (CG) PUSCH and a dynamic grant (DG) PUSCH), up to two (i.e., one or two) SRS resources (SRS resources using 3 antenna ports) may be configured for one SRS resource set.

For example, in an existing specification, neither an SRS using 3 antenna ports (which may be referred to as a 3-port SRS) nor enhancement/extension of such an SRS is supported. Therefore, for codebook-based three-layer transmission (3Tx for usage = 'codebook'), an SRS configuration indicated in the following options may be taken into account. In other words, the UE may control SRS transmission in accordance with at least one of the following options.

### {Option 1}

Up to two (i.e., one or two) SRS resources (SRS resources using 4 antenna ports) may be configured for one SRS resource set. Here, out of the 4 antenna ports, which 3 antenna ports are actually used and correspond to antenna ports for TPMI indication may be predetermined in a specification (for example, SRS antenna ports 0 to 2 correspond to TPMI antenna ports 0 to 2 (TPMIs = 0 to 2)) or may be configured in an SRS configuration.

In this case, even when SRSs using 4 antenna ports are configured, the UE transmits an SRS by using 3 TX (3 SRS antenna ports 0 to 2) for such configuration (4-port SRS configuration).

In other words, in this case, even when SRSs using 4 antenna ports are configured, the UE may control SRS (PUSCH) transmission with assuming that SRSs using 3 antenna ports are configured.

### {Option 2}

A 3-port SRS resource (an SRS resource using 3 antenna ports) may mean certain one 1-port SRS (an SRS corresponding to 1 antenna port) and other one 2-port SRSs (an SRS corresponding to 2 antenna ports). Here, which antenna port the 3 ports (3 antenna ports) each correspond to for TPMI indication may be predetermined in a specification (for example, the 1-port SRS corresponds to a TPMI antenna port 0 and the 2-port SRSs correspond to TPMI antenna ports 1 and 2, or the 2-port SRSs correspond to TPMI antenna ports 0 and 1 and the 1-port SRS corresponds to a TPMI antenna port 2), may be configured in an SRS configuration, or may be dynamically indicated by a new field in DCI.

### {Option 3}

A 3-port SRS resource (an SRS resource using 3 antenna ports) may mean three 1-port SRSs (SRSs each corresponding to 1 antenna port). Here, which antenna port the 3 ports (3 antenna ports) each correspond to for TPMI indication may be predetermined in a specification (for example, a first 1-port SRS corresponds to a TPMI antenna port 0, a second 1-port SRS corresponds to a TPMI antenna port 1, and a third 1-port SRS corresponds to a TPMI antenna port 2), may be configured in an SRS configuration, or may be dynamically indicated by a new field in DCI.

In each option described above, Rel-17 multi-TRP PUSCH repetition transmission may be supported for a 3-port PUSCH, in accordance with a UE capability (report).

### <Note 1>

For the 3 TX UE, only codebook-based PUSCH transmission (and a non-coherent codebook) may be supported. For example, the 3 TX UE may report, as a default UE capability, supporting of codebook-based PUSCH transmission. Alternatively, the 3 TX UE may report, as a default UE capability, (supporting of) a non-coherent codebook subset.

Note that the 3 TX UE reporting supporting of a non-coherent codebook subset does not mean that the UE only has a capability of non-coherent codebook. In actual implementation, the 3 TX UE may have a capability of full coherent, and for example in a specification of Rel. 19 or later versions, only a non-coherent codebook subset may be supported.

Note that the full power mode (full power transmission) may be neither supported nor configured for the 3 TX UE.

### <Note 2>

Another codebook subset (partial coherent and full coherent) different from the above-described non-coherent codebook subset may be supported, also for the 3 TX UE, by new codebook configuration.

With respect to the full power mode (full power transmission), depending on UE capabilities, model 0 (an RRC parameter of fullPower)/model 1 (an RRC parameter of fullPowerMode1)/model 2 (an RRC parameter of fullPowerMode2) in Rel. 16 may be configured for the 3 TX UE.

For example, in a case of fullPowerMode2, SRS configuration enhancement/extension of may be supported.

Non-codebook-based (NCB-based) PUSCH transmission may be supported and configured. For example, up to two SRS resource sets may be configured and, for each of the SRS resource sets, up to three 1-port SRS resources may be configured.

This embodiment allows the SRS configuration of the new codebook based PUSCH for the 3 TX UE to be supported.

### <Variations>

For codebook-based PUSCH transmission, the 3 TX UE may reuse (use) an existing specification (a precoder for 4 TX).

In an SRS configuration with respect to a codebook, up to two (i.e., one or two) 4-port SRS resources (SRS resources using 4 antenna ports) may be configured for one SRS resource set. In other words, for the 3 TX UE, a configuration similar to that for a 4 TX UE may be applied.

For example, similarly to Option 1 in the fourth embodiment described above, out of the 4 antenna ports, which 3 antenna ports are actually used and correspond to antenna ports for TPMI indication may be predetermined in a specification or may be configured in an SRS configuration.

For example, the UE may be predetermined/configured with that, out of the 4 antenna ports, certain 1 port "k" is not to be used. More specifically, it may be predetermined/configured that SRS ports 0, 1, and 2 are actually used and an SRS port 3 is not used.

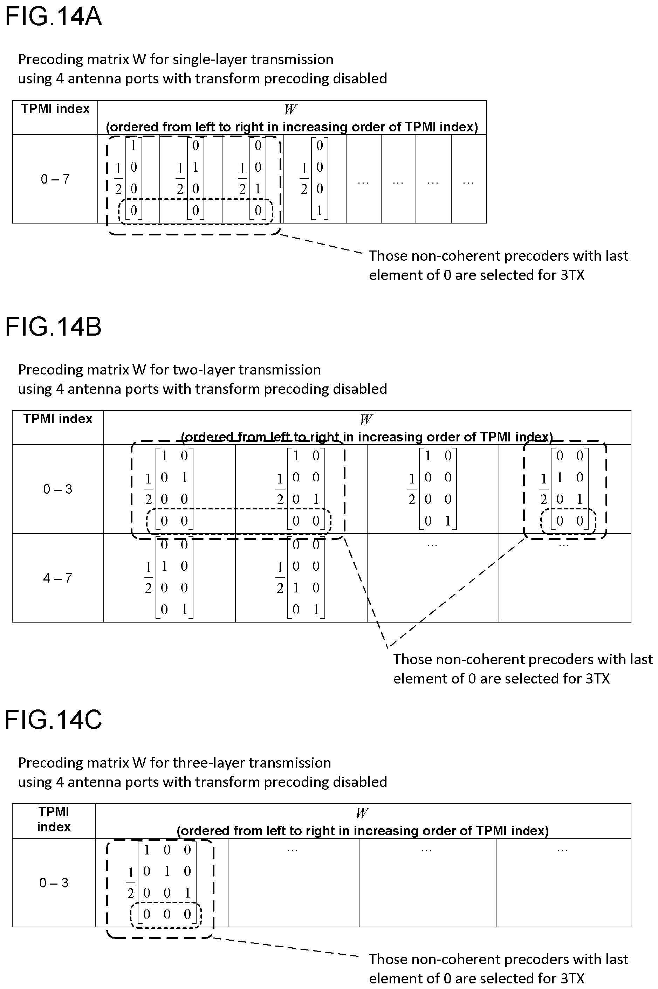

FIGS. 14A to 14C are diagrams to show examples of tables of precoding matrices W for one to three-layer (ranks 1 to 3) transmissions using 4 antenna ports in a case where a transform precoder is disabled, according to a variation. FIG. 14A corresponds to one-layer, FIG. 14B corresponds to two-layer, and FIG. 14C corresponds to three-layer.

As shown in FIGS. 14A to 14C, in UL codebooks for the 3 TX UE, an existing codebook for a 4 TX UE is reused for non-coherent precoders, and thus a limitation/restriction may be added that an antenna point (element) of a TPMI corresponding to the unused port "k" has an entry of "0."

For example, in a case where k = 3 and the SRS port 3 is not used, a precoder for 3 TX may be selected from 4-TX non-coherent precoders including an antenna point (element) corresponding to the fourth antenna port being "0." In other words, the UE may select/apply, as a precoder for 3 TX, a non-coherent precoder with the last element (the fourth antenna point) being 0.

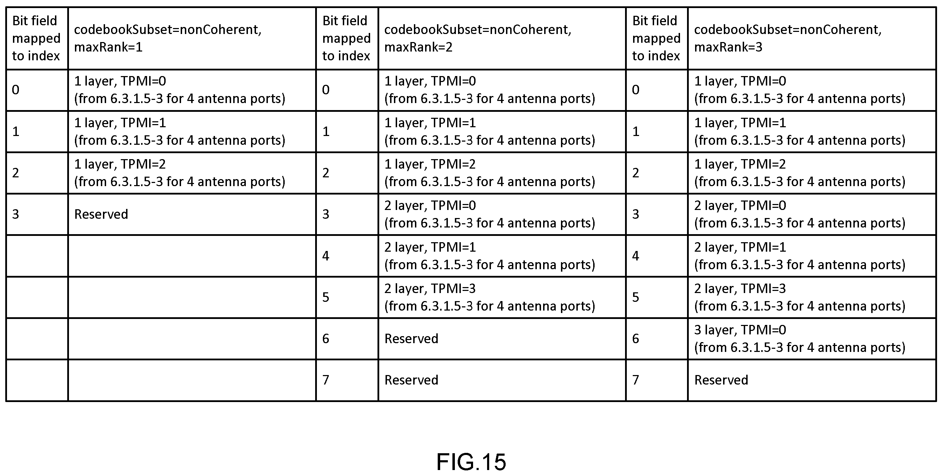

FIG. 15 is a diagram to show an example of a correspondence relation of precoding information and number of layers field values to the numbers of layers and TPMIs, according to a variation.

As shown in FIG. 15, a correspondence relation (table) of precoding information to the numbers of layers for a case of the maximum rank numbers = 1 to 3 in 3 antenna ports may reference to TPMI indices in an existing table for existing 4 antenna ports.

More specifically, as shown in FIG. 15, in a case where the codebook subset is non-coherent and the maximum rank number (transmission rank) is 1, the bit field indices (Bit field mapped to index) 0 to 2 respectively correspond to (indicate) TPMIs = 0 to 2 in one-layer. The bit field index 3 may be a reserved bit.

In a case where the codebook subset is non-coherent and the maximum rank number is 2, the bit field indices 0 to 2 respectively correspond to (indicate) TPMIs = 0 to 2 in one-layer, the bit field indices 3 to 4 respectively correspond to TPMIs = 0 to 1 in two-layer, and the bit field index 5 corresponds to TPMI = 3 in two-layer. The bit field indices 6 and 7 may be reserved bits.

In a case where the codebook subset is non-coherent and the maximum rank number is 3, the bit field indices 0 to 2 respectively correspond to (indicate) TPMIs = 0 to 2 in one-layer, the bit field indices 3 to 4 respectively correspond to TPMIs = 0 to 1 in two-layer, the bit field index 5 corresponds to TPMI = 3 in two-layer, and the bit field index 6 corresponds to TPMI = 0 in three-layer. The bit field index 7 may be a reserved bit.

The variation allows the UE to judge/select/apply a precoder for the 3 TX UE by using an existing codebook for a 4 TX UE.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information for at least one of the embodiments above
- supporting of 8 TX UL transmission
- supporting of a plurality of different antenna layouts/numbers of antenna groups
- a coherent group to support

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. Examples of the specific information may include supporting of 8 TX UL transmission, information indicating enablement of supporting of a plurality of different antenna layouts/numbers of antenna groups, any RRC parameter for a specific release (for example, Rel. 18/19), and the like.

In a case where the UE does not support at least one of the specific UE capabilities described above or is not configured with the specific information, an operation in Rel. 15/16 may be applied, for example.

### (Supplementary Note)

Regarding one embodiment (the first/second embodiment) of the present disclosure, the following supplementary notes of the invention will be given.

### {Supplementary Note 1}

A terminal including:
a receiving section that receives a codebook for a downlink shared channel (PUSCH) transmission in one-layer or more using 3 antenna ports; and
a control section that judges, based on the codebook, a non-coherent precoder for the PUSCH transmission.

### {Supplementary Note 2}

The terminal according to supplementary note 1, wherein the codebook is defined separately for transmission ranks or defined common to transmission ranks.

### {Supplementary Note 3}

The terminal according to supplementary note 1 or 2, wherein
the receiving section receives downlink control information including a field indicating precoding information and the number of layers for non-coherent precoders defined for respective transmission ranks, and
the control section judges, based on the field, a transmitted precoding matrix (TPMI) indicator and the number of layers using 3 antenna ports, to be applied to the PUSCH transmission.

### {Supplementary Note 4}

The terminal according to any one of supplementary notes 1 to 3, wherein
the receiving section receives downlink control information including a field indicating precoding information and the number of layers for non-coherent precoders defined for respective transmission ranks, and
a size of the field differs depending on the transmission ranks.

### (Supplementary Note)

Regarding one embodiment (the third/fourth embodiment) of the present disclosure, the following supplementary notes of the invention will be given.

### {Supplementary Note 1}

A terminal including:
a control section that judges, based on a codebook for a downlink shared channel (PUSCH) transmission in one-layer or more using 3 antenna ports, a non-coherent precoder for the PUSCH transmission; and
a transmitting section that reports, in a case where the PUSCH transmission is supported, a capability related to use of 3 antenna ports.

### {Supplementary Note 2}

The terminal according to supplementary note 1, further including
a receiving section that receives a sounding reference signal (SRS) configuration, wherein
an SRS resource using 4 antenna ports is configured in the SRS configuration, and
the control section controls the PUSCH transmission by using 3 antenna ports out of the 4 antenna ports.

### {Supplementary Note 3}

The terminal according to supplementary note 1 or 2, further including
a receiving section that receives a sounding reference signal (SRS) configuration, wherein
an SRS resource using 3 antenna ports is indicated in the SRS configuration with TPMI indices corresponding to the respective antenna ports.

### {Supplementary Note 4}

The terminal according to any one of supplementary notes 1 to 3, wherein the control section assumes, regarding a codebook for 4 antenna ports, that an antenna point of a transmitted precoding matrix (TPMI) indicator corresponding to a specific port is zero and controls the PUSCH transmission by using 3 antenna ports.

### (Radio Communication System)

Hereinafter, a structure of a radio communication system according to one embodiment of the present disclosure will be described. In this radio communication system, the radio communication methods according to the embodiments of the present disclosure described above may be used alone or may be used in combination for communication.

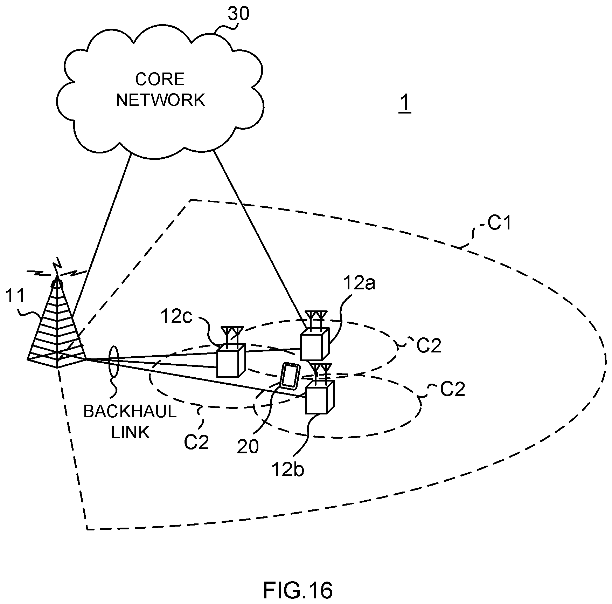

FIG. 16 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

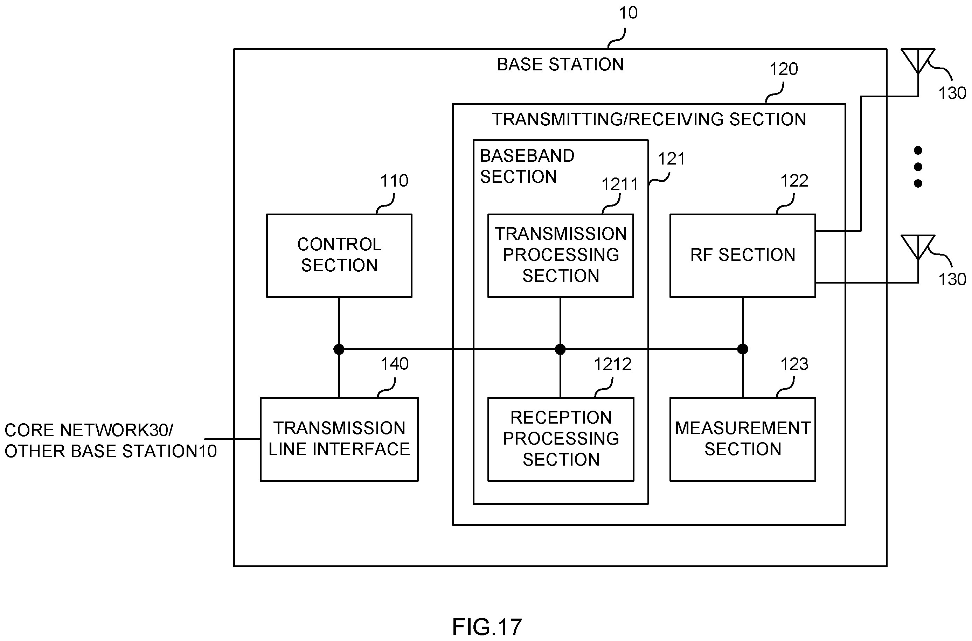

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a codebook for a downlink shared channel (PUSCH) transmission in one-layer or more using 3 antenna ports. The transmitting/receiving section 120 may receive the PUSCH transmission using a non-coherent precoder specified in the codebook.

The control section 110 may control reception of a downlink shared channel (PUSCH) transmission, the PUSCH transmission using a non-coherent precoder specified in a codebook for the PUSCH transmission in one-layer or more using 3 antenna ports. The transmitting/receiving section 120 may receive, in a case where the PUSCH transmission is supported, a report of a capability related to use of 3 antenna ports.

### (User Terminal)

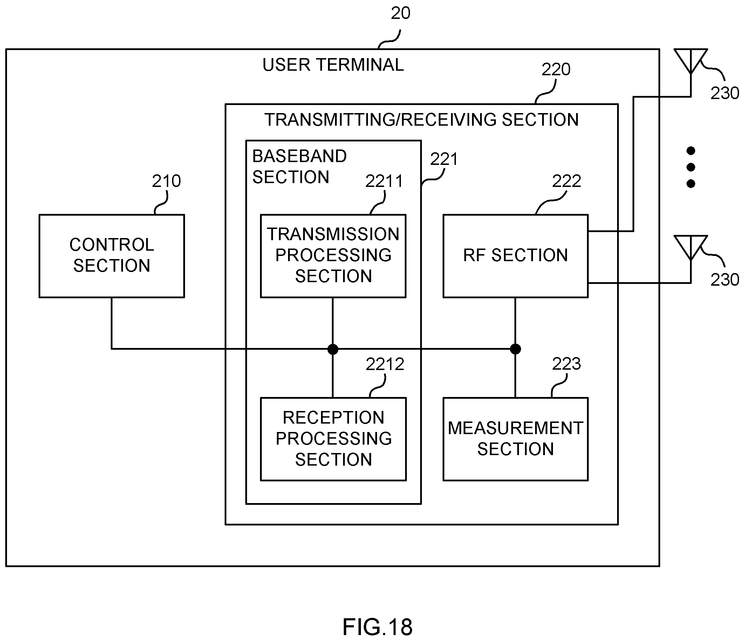

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a codebook for a downlink shared channel (PUSCH) transmission in one-layer or more using 3 antenna ports. The control section 210 may judge, based on the codebook, a non-coherent precoder for the PUSCH transmission. The codebook may be defined separately for transmission ranks or defined common to transmission ranks. The transmitting/receiving section 220 may receive downlink control information including a field indicating precoding information and the number of layers for non-coherent precoders defined for the respective transmission ranks. The control section 210 may judge, based on the field, a transmitted precoding matrix (TPMI) indicator and the number of layers using 3 antenna ports, to be applied to the PUSCH transmission. The transmitting/receiving section 220 may receive downlink control information including a field indicating precoding information and the number of layers for non-coherent precoders defined for the respective transmission ranks. A size of the field may differ depending on the transmission ranks.

The control section 210 may judge, based on a codebook for a downlink shared channel (PUSCH) transmission in one-layer or more using 3 antenna ports, a non-coherent precoder for the PUSCH transmission. The transmitting/receiving section 220 may report, in a case where the PUSCH transmission is supported, a capability related to use of 3 antenna ports. The transmitting/receiving section 220 may receive a sounding reference signal (SRS) configuration. An SRS resource using 4 antenna ports may be configured in the SRS configuration. The control section 210 may control the PUSCH transmission by using 3 antenna ports out of the 4 antenna ports. An SRS resource using 3 antenna ports may be indicated in the SRS configuration with TPMI indices corresponding to the respective antenna ports. The control section 210 may assume, regarding a codebook for 4 antenna ports, that an antenna point of a transmitted precoding matrix (TPMI) indicator corresponding to a specific port is zero and control the PUSCH transmission by using 3 antenna ports.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

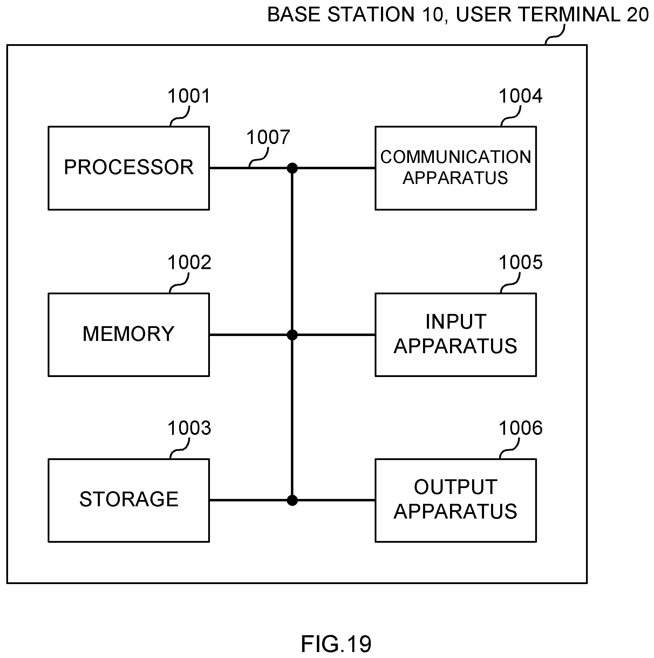

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

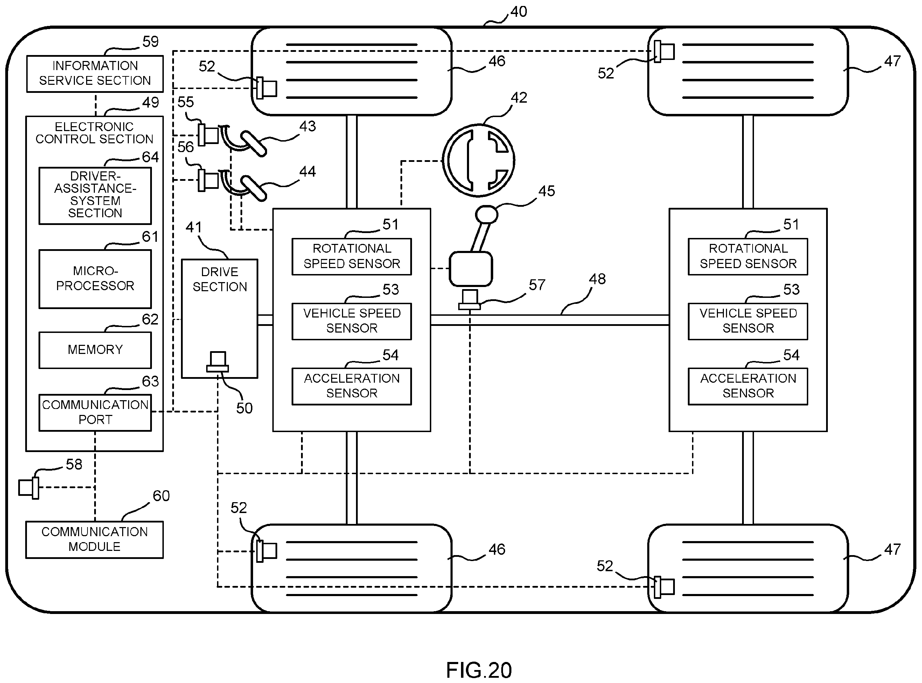

FIG. 20 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that judges, based on a codebook for a downlink shared channel (PUSCH) transmission in one-layer or more using 3 antenna ports, a non-coherent precoder for the PUSCH transmission; and
a transmitting section that reports, in a case where the PUSCH transmission is supported, a capability related to use of 3 antenna ports.

2. The terminal according to claim 1, further comprising
a receiving section that receives a sounding reference signal (SRS) configuration, wherein
an SRS resource using 4 antenna ports is configured in the SRS configuration, and
the control section controls the PUSCH transmission by using 3 antenna ports out of the 4 antenna ports.

3. The terminal according to claim 1, further comprising
a receiving section that receives a sounding reference signal (SRS) configuration, wherein
an SRS resource using 3 antenna ports is indicated in the SRS configuration with TPMI indices corresponding to the respective antenna ports.

4. The terminal according to claim 1, wherein
the control section assumes, regarding a codebook for 4 antenna ports, that an antenna point of a transmitted precoding matrix (TPMI) indicator corresponding to a specific port is zero and controls the PUSCH transmission by using 3 antenna ports.

5. A radio communication method for a terminal, the radio communication method comprising:
judging, based on a codebook for a downlink shared channel (PUSCH) transmission in one-layer or more using 3 antenna ports, a non-coherent precoder for the PUSCH transmission; and
reporting, in a case where the PUSCH transmission is supported, a capability related to use of 3 antenna ports.

6. A base station comprising:
a control section that controls reception of a downlink shared channel (PUSCH) transmission, the PUSCH transmission using a non-coherent precoder specified in a codebook for the PUSCH transmission in one-layer or more using 3 antenna ports; and
a receiving section that receives, in a case where the PUSCH transmission is supported, a report of a capability related to use of 3 antenna ports.
